# EUROPÄISCHE PATENTSCHRIFT

(11) **EP 1 634 035 B1**
(45) Veröffentlichungstag und Bekanntmachung des Hinweises auf die Patenterteilung: **09.07.2008**
(21) Anmeldenummer: 04725601.1
(22) Anmeldetag: 03.04.2004
(51) Int. Cl.: G01B 9/02, G01B 11/24, G01B 11/30

(54) **INTERFEROMETRISCHE MESSVORRICHTUNG**
INTERFEROMETRIC MEASURING DEVICE
DISPOSITIF DE MESURE INTERFEROMETRIQUE

(30) Priorität: 05.06.2003 DE 10325443
(43) Veröffentlichungstag der Anmeldung: 15.03.2006
(73) Patentinhaber: ROBERT BOSCH GMBH, 70442 Stuttgart (DE)
(72) Erfinder: LINDNER, Michael, 71397 Leutenbach (DE)
(86) Internationale Anmeldenummer: PCT/DE2004/000699
(87) Internationale Veröffentlichungsnummer: WO 2004/109226

(56) Entgegenhaltungen:
- DE-A- 10 039 239
- DE-A- 10 131 778
- US-A- 5 684 545
- US-B1- 6 449 048

## Beschreibung

Die Erfindung bezieht sich auf eine interferometrische Messvorrichtung zur Formvermessung einer Oberfläche eines Objektes mittels Tiefenabtastung mit einer eine kurzkohärente Strahlung abgebenden Strahlungsquelle, einem Strahlteiler zum Bilden eines über einen Objektlichtweg mit einer Rundsichtoptik zu dem Objekt geleiteten Objektstrahls und eines über einen Referenzlichtweg zu einem reflektierenden Referenzelement geleiteten Referenzstrahls und mit einem Bildaufnehmer, der die von dem Objekt und dem Referenzelement zurückgeworfene und zur Interferenz gebrachte Strahlung aufnimmt und einer Auswerteeinrichtung zum Bestimmen der Oberflächenform zuführt.

### Stand der Technik

Eine derartige interferometrische Messvorrichtung, üblicherweise als Weisslicht-Interferometer bezeichnet, ist in der DE 101 31 778 A1 angegeben, worin auch die grundsätzliche Funktionsweise eines derartigen Weisslicht-Interferometers unter Hinweis auf weitere Nachweise beschrieben ist. Bei dieser bekannten interferometrischen Messvorrichtung wird in der üblichen Weise zur Lichterzeugung eine kurzkohärente Lichtquelle verwendet, deren Licht über einen Strahlteiler in einen über einen Objektlichtweg geführten Objektstrahl und einen über einen Referenzlichtweg geführten Referenzstrahl aufgeteilt wird. Die zu vermessende Objektoberfläche wird über ein Objektiv auf einen Bildaufnehmer beispielsweise einer CCD-Kamera abgebildet und von der durch den Referenzstrahl gebildeten Referenzwelle überlagert. Die Tiefenabtastung kann durch Bewegen eines den Referenzstrahl reflektierenden Referenzelementes oder des Objekts relativ zu der Messvorrichtung durchgeführt werden. Beim Bewegen des Objektes sind Bildebene des Objektivs und Referenzebene in derselben Ebene. Während der Tiefenabtastung bleibt das Objekt starr im Gesichtsfeld der CCD-Kamera, und das Objekt wird nur in der Tiefenachse (z-Richtung) relativ zur Referenzebene bewegt. Auf diese Weise können Messungen technischer Oberflächen mit einer Tiefenauflösung im Bereich weniger Nanometer vermessen werden. Mit der Rundsichtoptik und dem in dieser Druckschrift beschriebenen Objektiv wird zudem eine Messung in engen und tiefen Bohrungen mit einer um 360° umlaufenden Aufnahme eines nahezu radialsymmetrischen Objekts ermöglicht, so dass beispielsweise Ventilsitze vollständig vermessen werden können. Allerdings ist es auch bei dieser interferometrischen Messvorrichtung schwierig, Führungsbohrungen vollständig zu vermessen.

Eine für tiefe und enge Bohrungen geeignete, ebenfalls auf dem Prinzip der Weisslicht-Interferometrie basierende interferometrische Messvorrichtung ist auch in der DE 101 15 524 A1 gezeigt, wobei mittels des als Endoskop ausgebildeten Objektivs eine Zwischenabbildung erzeugt und zur Tiefenabtastung eine Zwischenbildabtastung vorgenommen wird. Während der Tiefenabtastung bleibt das Objekt starr im Gesichtsfeld des Bildaufnehmers bzw. der CCD-Kamera. Auch mit dieser bekannten Messvorrichtung ist eine vollständige Messung einer Führungsbohrung und zudem auch eines Ventilsitzes schwierig.

Ferner ist auch bekannt, eine gut zugängliche Objektoberfläche mit einem sogenannten lateral abtastenden Weisslicht-Interferometer zu vermessen, wie in A. Olszak "Lateral scanning white-light interferometer", Applied Optics, Vol. 39, 3907-3913, 2000 beschrieben. Hierbei ist die Referenzebene schräg zur Objektoberfläche geneigt. Für die Tiefenabtastung wird das Objekt lateral durch das Gesichtsfeld des Objektivs derart gefahren, dass sich für jeden Objektpunkt eine relative Änderung der optischen Weglänge zwischen Referenzlichtweg und Objektlichtweg bzw. Referenzarm und Objektarm ergibt. Für jeden Objektpunkt wird bei der lateralen Bewegung das aus der lateralen Bewegung resultierende Korrelogramm aufgenommen und ausgewertet. Mit dieser Vorrichtung können räumlich ausgedehnte Objekte und sich bewegende Objekte vermessen werden. Eine Messung in engen und tiefen Bohrungen ist mit dieser Vorrichtung nicht möglich.

Der Erfindung liegt die Aufgabe zugrunde, insbesondere tiefe und enge Bohrungen oder z.B. Ventilsitze schnell und zuverlässig zu vermessen.

### Vorteile der Erfindung

Diese Aufgabe wird mit den Merkmalen des Anspruches 1 gelöst. Hiernach ist vorgesehen, dass mittels des Referenzelementes eine bezüglich der Objektoberfläche schräg orientierte Referenzfläche gebildet ist, und dass die Vorrichtung so ausgebildet ist, dass die Tiefenabtastung zur Formvermessung mittels lateraler Bewegung des Objektes relativ zu dem Objektstrahl erfolgt. Hierbei wird ein bzw. jeder Punkt der Objektoberfläche während der Tiefenabtastung seitlich über den Bildaufnehmer bewegt, wobei sich der optische Weglängenunterschied zwischen Objekt- und Referenzlichtweg ändert. Mit der Tiefenabtastung durch laterale Bewegung des Objektes relativ zu dem Objektstrahl in Kombination mit der Rundsichtoptik können insbesondere auch Objektoberflächen in engen und tiefen Bohrungen schnell und zuverlässig vermessen werden. Es ist lediglich eine Relativbewegung der Objektoberfläche in axialer Richtung der Vertiefung, insbesondere Bohrung erforderlich, um die gesamte Objektoberfläche in der Bohrung zu vermessen. Hierdurch können Führungsbohrungen mit relativ wenig Aufwand vollständig vermessen werden. Auch ein Rundlauf, d.h. die relative räumliche Lage eines Ventilsitzes zur Führungsbohrung, sowie der Durchmesser der Bohrung können mittels entsprechender Auswertung mit relativ wenig Aufwand bestimmt werden. Infolge der robusten Vorrichtung bzw. der robusten Messvorgänge eignet sich die Messvorrichtung insbesondere auch für den Einsatz in der Fertigung.

Eine für den Aufbau und zum Erzielen zuverlässiger Messergebnisse vorteilhafte Ausgestaltung besteht darin, dass die Rundsichtoptik zum Erzeugen einer Kugelwelle mit Zentrum in oder außerhalb der Rundsichtoptik ausgebildet ist.

Die Messvorgänge werden dabei dadurch begünstigt, dass die Objektoberfläche bezüglich einer Objektachse teilweise rotationssymmetrisch ist, dass die Rundsichtoptik zur Abbildung der so geformten Oberfläche, insbesondere eines Zylinders, eines Kegels oder einer Kugel, in eine Ebene ausgebildet ist und dass sich die Rundsichtoptik während der Tiefenabtastung entlang der Objektachse bewegt.

Zu einer genauen, zuverlässigen Messung tragen weiterhin die Maßnahmen bei, dass die Rundsichtoptik zur Erzeugung einer senkrecht zur Objektoberfläche liegenden Wellenfront ausgebildet ist.

Der Aufbau und die Handhabung insbesondere bei der Vermessung enger Hohlräume werden ferner dadurch begünstigt, dass die Rundsichtoptik als Endoskop und/oder zum Erzeugen eines Zwischenbildes in einem im Objektlichtweg liegenden Objektarm ausgebildet ist.

Verschiedene vorteilhafte Ausgestaltungsmöglichkeiten je nach Messaufgabe bestehen darin, dass das Referenzelement als sphärischer, kegelförmiger oder ebener Referenzspiegel ausgebildet ist.

Die Bedienung kann weiterhin durch die Maßnahmen vereinfacht werden, dass das Interferometer derart aufgebaut ist, dass der Objektstrahl und der Referenzstrahl im gleichen Lichtweg gebildet sind.

Verschiedene vorteilhafte Aufbaumöglichkeiten ergeben sich dadurch, dass der Bildaufnehmer als Teil einer CCD-Kamera oder einer CMOS-Kamera oder als Anordnung aus Photodioden ausgebildet ist und dass die Auswerteeinrichtung derart ausgebildet ist, dass nur der Bereich eines Interferenzgebietes berücksichtigt wird.

Zur Genauigkeit der Messung tragen weiterhin die Maßnahmen bei, dass die Referenzfläche den Bereich der Objektoberfläche, der im Abbildungsbereich der Rundsichtoptik liegt, schräg zur Objektoberfläche schneidet, vorzugsweise in der Schnittlinie aus Bildebene und Objektoberfläche.

Weitere vorteilhafte Ausgestaltungsmöglichkeiten bestehen darin, dass die Referenzfläche sphärisch mit gleichem oder unterschiedlichem Radius wie die Bildebene, als Kegel oder als Ebene ausgebildet ist.

Zur Vermessung von Objekten mit unterschiedlichen Geometrien (Zylinder, Kegel, etc.) oder unterschiedlichem Durchmesser oder Kegelwinkel ist es vorteilhaft, aktive optische Elemente (AOE) einzusetzen (z.B. Linsen mit elektronisch verstellbarer Brennweite). Mit diesen aktiven optischen Elementen können die Abbildungseigenschaften des Strahlengangs (bis zum Bildaufnehmer) und/oder der Rundsichtoptik vor oder während der Messung auf neue oder sich während der Messung ändernde Geometrien angepasst werden, um die zu vermessenden Oberflächen immer scharf auf den Bildaufnehmer abzubilden.

Zur Verbesserung der interferometrischen Signale bei neuen oder sich während der Messung ändernden Geometrien /Durchmessern, ist es vorteilhaft, den Referenzstrahlengang beeinflussen zu können. Dies kann durch eine Verschiebung des Referenzspiegels erfolgen, durch den Einsatz von mindestens eines adaptiven optischen Elements bzw. eines aktiven Spiegels, der seine Krümmung ändern kann, im Referenz-Strahlengang.

### Zeichnung

Die Erfindung wird nachfolgend anhand von Ausführungsbeispielen unter Bezugnahme auf die Zeichnungen näher erläutert. Es zeigen:
- Fig. 1: eine schematische Darstellung einer interferometrischen Messvorrichtung in seitlicher Ansicht,
- Fig. 2: eine Abbildung eines Oberflächenbereiches auf einem Bildaufnehmer der Messvorrichtung und
- Fig. 3: ein weiteres Ausführungsbeispiel für eine interferometrische Messvorrichtung.

### Ausführungsbeispiel

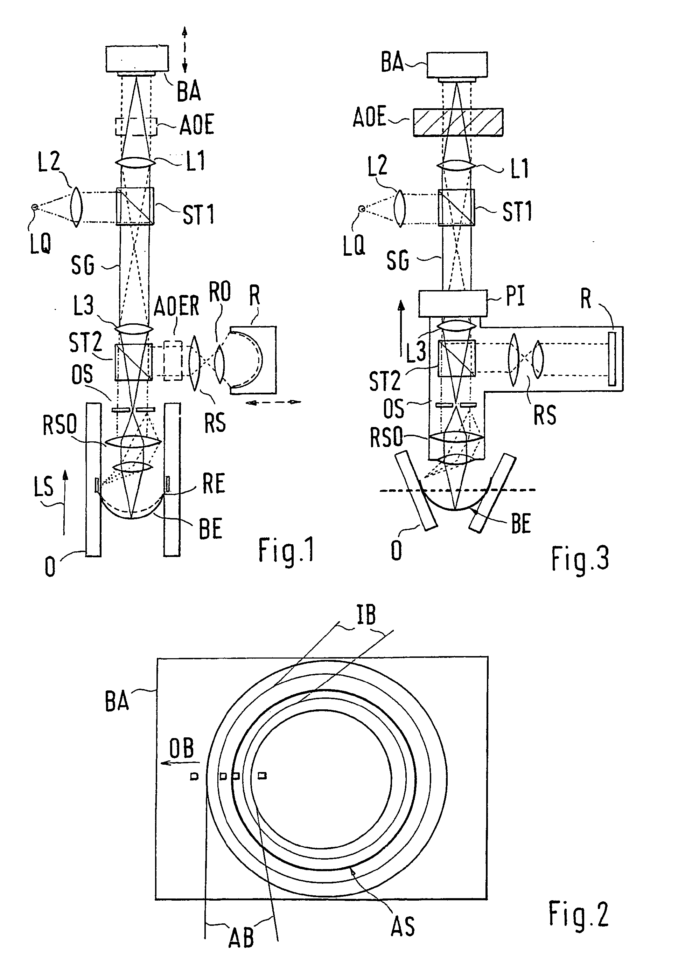

Eine in Fig. 1 gezeigte interferometrische Messvorrichtung, die nach der an sich bekannten Methode der Weisslicht-Interferometrie arbeitet (s. z.B. den in der Beschreibungseinleitung genannten Stand der Technik mit weiteren Nachweisen), weist zum Erzeugen von Licht relativ großer spektraler Breite (Weisslicht) eine kurzkohärente Lichtquelle LQ mit einer Kohärenzlänge vo z.B. einiger oder einer Zehn µm auf, deren Licht über eine Linse L2 auf einen ersten Strahlteiler ST1 geführt und von diesem über einen Strahlengang SG einem zweiten Strahlteiler ST2 zugeführt wird, der das Licht in einen über einen Referenzlichtweg zu einem reflektierenden Referenzelement R geführten Referenzstrahl RS und einen über einen Objektlichtweg zu der Oberfläche eines Objektes O geleiteten Objektstrahl OS aufteilt. Das von dem Referenzelement R und der Objektoberfläche reflektierte Licht gelangt wiederum zu dem zweiten Strahlteiler ST2, wird einander überlagert und gelangt über den Strahlengang SG und den ersten Strahlteiler ST1, eine weitere Linse L1 und ein beispielsweise eingebrachtes aktives optisches Element AOE auf einen Bildaufnehmer BA z.B. einer CCD-Kamera oder einer CMOS-Kamera und wird in einer daran angeschlossenen Auswerteeinrichtung zum Bestimmen der Oberflächenform oder damit zusammenhängender Eigenschaften ausgewertet.

In dem Strahlengang SG können weitere optische Elemente beispielsweise mit einer weiteren Linse L3 angeordnet sein. In dem Referenzlichtweg, der in einem Referenzarm gebildet ist, ist eine Referenzoptik RO beispielsweise mit einem weiteren aktiven optischen Element AOER sowie weiteren optischen Elementen angeordnet. Das Referenzelement R weist beispielsweise einen sphärischen Spiegel auf, um im Bereich der zu vermessenden Objektoberfläche eine entsprechende Referenzfläche RE zu bilden.

Die Objetivoptik ist als Rundsichtoptik RSO ausgestaltet. Durch die Rundsichtoptik RSO kann ein um bis zu 360° umlaufender Bereich an einer zumindest nahezu radialsymmetrischen Oberfläche des Objekts O, beispielsweise einer Führungsbohrung, auf den flächenhaften, mit einzelnen Bildelementen (Pixeln) versehenen Bildaufnehmer BA abgebildet werden. Die Rundsichtoptik RSO erzeugt vorzugsweise eine sphärische Bildebene BE. Der Bereich der Oberfläche, welcher die Schnittfläche der sphärischen Bildebene BE mit der Objektoberfläche (z.B. Zylinder, Kegel, Kugel, Paraboloid oder dgl.) darstellt, wird scharf auf den Bildaufnehmer BA abgebildet und stellt den Abbildungsbereich dar. Der Abbildungsbereich kann eine Breite von nur wenigen 100µm betragen. Die Referenzfläche RE wird so ausgebildet, dass sie schräg zur Oberfläche des Objektes O liegt. Die Referenzfläche RE schneidet den Abbildungsbereich vorzugsweise in der Schnittlinie aus Bildebene BE und Objektoberfläche. Die Referenzfläche RE ist vorzugsweise auch sphärisch mit gleichem oder unterschiedlichem Radius wie die Bildebene BE ausgeprägt, kann aber auch eine andere Form aufweisen, beispielsweise kegelförmig oder eben sein.

Die Strahlung eines Objektpunktes zeigt Interferenzen mit derjenigen der Referenzebene RE, wenn der optische Gängunterschied zwischen dem betreffenden Objektstrahl OS und Referenzstrahl RS kleiner als die Kohärenzlänge ist. Auf dem Bildaufnehmer BA stellt der Interferenzbereich IB (vgl. Fig. 2) einen ausgedehnten Bereich um den Bereich scharfer Abbildung AS des Abbildungsbereiches AB dar.

Für die Tiefenabtastung wird das Objekt O entlang der gemeinsamen Achse der Rundsichtoptik RSO und des Objekts O (z.B. Achsrichtung der Bohrung) bewegt.

Jeder Objektpunkt bewegt sich dabei durch den Abbildungsbereich und die Referenzfläche RE. Ist der Objektpunkt im Zentrum des Abbildungsbereichs, wird er mit bester lateraler Auflösung abgebildet. In dieser Position liegt er vorzugsweise direkt in der Referenzfläche RE. Der Objektpunkt zeigt maximalen Interferenzkontrast. Bei weiterer lateraler Bewegung wandert der Objektpunkt (Bewegung des Objektpunktes OB) aus dem Zentrum der Referenzfläche RE und erfährt eine Modulation der Interferenzen. Ist der Objektpunkt außerhalb des Interferenzgebietes, zeigt er keine Interferenzen mehr auf. Durch die laterale Abtastbewegung LS in Verbindung mit der Rundsichtoptik wird ein um 360° umlaufender Bereich der Objektoberfläche auf dem Bildaufnehmer BA abgebildet. Durch die laterale Abtastbewegung LS wandert jeder Messpunkt in diesen Bereich und verlässt ihn wieder. Innerhalb des Bereiches erfährt er durch die Neigung der Referenzfläche RE zur Objektoberfläche eine Modulation der Interferenzen, wodurch seine Höhe vermessen werden kann. Die Tiefenabtastung erfolgt derart, dass durch die laterale Abtastbewegung LS eines Objektpunktes eine relative Änderung der optischen Weglänge zwischen Objektlichtweg und Referenzlichtweg erfolgt.

Im Einzelnen kann, wie in Fig. 3 gezeigt, in der Messanordnung ein interferometrisches Objektiv mit einer Rundsichtoptik RSO und einer Kompensationsoptik im Referenzarm als Wechselobjektiv an einem Verstellelement, z.B. in Form eines Piezos PI angebracht werden. Der Tiefenscan wird über den Piezo PI durchgeführt, derart, dass sich ein Punkt der Oberfläche des Objekts, beispielsweise eines Ventils oder Ventilsitzes, seitlich über den Bildaufnehmer BA bewegt und sich dabei der optische Weglängenunterschied zwischen Objekt- und Referenzlichtweg ändert. Diese Anordnung hat den Vorteil, dass das interferometrische Objektiv mit einer Rundsichtoptik RS gegen herkömmliche interferometrische Objekte leicht ausgetauscht werden kann. Auch bei dieser Messvorrichtung kann ein adaptives optisches Element AOE eingesetzt werden, das während des Tiefenscans angesteuert wird, um den Ventilsitz am Ort der Messung stets scharf abzubilden.

Die Auswerteeinrichtung muss nicht zum Auswerten sämtlicher Bildpunkte des flächigen Bildaufnehmers BA ausgelegt sein, sondern kann derart ausgebildet sein, dass lediglich der Bereich des Interferenzgebietes ausgewertet wird, so dass die Verarbeitungsgeschwindigkeit zum Erhalten der Messergebnisse gesteigert wird.

Durch die Verwendung der Rundsichtoptik in Verbindung mit einem Verfahren der lateralen Tiefenabtastung wird für die Messung einer kompletten Führungsbohrung lediglich eine Bewegung entlang der Achse der Bohrung erforderlich.

Die Vorrichtung kann damit einfach und robust ausgeführt werden. Auch Messungen von Ventilsitzen oder dgl. sind möglich. Mit diesem Aufbau und diesem Verfahren können erstmals komplette Führungsbohrungen vollständig genau, schnell, robust und einfach vermessen werden. Ein Einsatz in der Fertigung ist möglich, wobei auch der Durchmesser, Ventilsitze und der Rundlauf zwischen Ventilsitz und Führungsbohrung gemessen werden können.

## Patentansprüche

1. Interferometrische Messvorrichtung zur Formvermessung einer Oberfläche eines Objektes (O) mittels Tiefenabtastung mit einer eine kurzkohärente Strahlung abgebenden Strahlungsquelle (LQ), einem Strahlteiler (ST) zum Bilden eines über einen Objefctlichtweg mit einer Rundsichtoptik (RSO) zu dem Objekt (O) geleiteten Objektstrahls (OS) und eines über einen Referenzlichtweg zu einem reflektierenden Referenzelement (R) geleiteten Referenzstrahls (RS) und mit einem Bildaufnehmer (BA), der die von dem Objekt (O) und dem Referenzelement (R) zurückgeworfene und zur Interferenz gebrachte Strahlung aufnimmt und einer Auswerteeinrichtung zum Bestimmen der Oberflächenform zuführt, wobei mittels des Referenzelementes (R) eine bezüglich der Objektoberfläche schräg orientierte Referenzfläche (RE) gebildet ist, und die Vorrichtung so ausgebildet ist, dass die Tiefenabtastung zur Formvermessung mittels paralleler Relativbewegung des Objektes (O) zur gemeinsamen Achse der Rundsichtoptik (RSO) und des Objekts (O) erfolgt,
**dadurch gekennzeichnet,**
**dass** die Rundsichtoptik (RSO) zum Erzeugen einer sphärischen Bildebene (BE) ausgebildet ist.

2. Vorrichtung nach Anspruch 1,
**dadurch gekennzeichnet,**
**dass** die Rundsichtoptik (RSO) zum Erzeugen einer Kugelwelle mit Zentrum in oder außerhalb der Rundsichtoptik (RSO) ausgebildet ist.

3. Vorrichtung nach Anspruch 1 oder 2,
**dadurch gekennzeichnet,**
**dass** die Objektoberfläche bezüglich einer Objektachse zumindest teilweise rotationssymmetrisch ist,
**dass** die Rundsichtoptik (RSO) zur Abbildung der so geformten Oberfläche, insbesondere eines Zylinders, eines Kegels oder einer Kugel, in eine Ebene ausgebildet ist und
**dass** sich die Rundsichtoptik während der Tiefenabtastung entlang der Objektachse bewegt.

4. Vorrichtung nach einem der vorhergehenden Ansprüche,
**dadurch gekennzeichnet,**
**dass** die Rundsichtoptik (RSO) zur Erzeugung einer senkrecht zur Objektoberfläche liegenden Wellenfront ausgebildet ist.

5. Vorrichtung nach einem der vorhergehenden Ansprüche,
**dadurch gekennzeichnet,**
**dass** die Rundsichtoptik (RSO) als Endoskop und/oder zum Erzeugen eines Zwischenbildes in einem im Objektlichtweg liegenden Objektarm ausgebildet ist.

6. Vorrichtung nach einem der vorhergehenden Ansprüche,
**dadurch gekennzeichnet,**
**dass** das Referenzelement (R) als sphärischer, kegelförmiger oder ebener Referenzspiegel ausgebildet ist.

7. Vorrichtung nach einem der vorhergehenden Ansprüche,
**dadurch gekennzeichnet,**
**dass** das Interferometer derart aufgebaut ist, dass der Objektstrahl (OS) und der Referenzstrahl (RS) im gleichen Lichtweg (Common-Path-Anordnung) gebildet sind.

8. Vorrichtung nach einem der vorhergehenden Ansprüche,
**dadurch gekennzeichnet,**
**dass** der Bildaufnehmer (BA) als Teil einer CCD-Kamera oder einer CMOS-Kamera oder als Anordnung aus Photodioden ausgebildet ist und
**dass** die Auswerteeinrichtung derart ausgebildet ist, dass nur der Bereich eines Interferenzgebietes berücksichtigt wird.

9. Vorrichtung nach einem der vorhergehenden Ansprüche,
**dadurch gekennzeichnet,**
**dass** die Referenzfläche (RE) den Bereich der Objektoberfläche, der im Abbildungsbereich der Rundsichtoptik (RSO) liegt, schräg zur Objektoberfläche vorzugsweise in der Schnittlinie aus Bildebene (BE) und Objektoberfläche schneidet.

10. Vorrichtung nach einem der vorhergehenden Ansprüche,
**dadurch gekennzeichnet,**
**dass** die Referenzfläche (RE) sphärisch mit gleichem oder unterschiedlichem Radius wie die Bildebene, als Kegel oder als Ebene ausgebildet ist.

11. Vorrichtung nach einem der vorhergehenden Ansprüche,
**dadurch gekennzeichnet,**
**dass** bei der Abbildung des Objektes (o) auf den Bildaufnehmer (BA) die Abbildungseigenschaften durch mindestens ein in den betreffenden Strahlengang eingefügtes adaptives optisches Element (AOE) beeinflussbar ist.

12. Vorrichtung nach einem der vorhergehenden Ansprüche,
**dadurch gekennzeichnet,**
**dass** in dem Referenzstrahlengang mindestens ein adaptives optisches Element (AOER) eingefügt ist, mit dem der Referenzstrahlengang zum Anpassen der Referenzebene beeinflussbar ist.

## Claims

1. Interferometric measuring device for measuring the shape of a surface of an object (O) by means of depth scanning, having a radiation source (LQ) outputting a short-coherence radiation, a beam splitter (ST) for forming an object beam (OS) guided to the object (O) via an object light path with the aid of a panoramic optics (RSO), and for forming a reference beam (RS) guided to a reflecting reference element (R) via a reference light path, and having an image sensor (BA) which picks up the radiation retroreflected by the object (O) and the reference element (R) and brought to interference, and feeds it to an evaluation device for determining the surface shape, a reference surface (RE) oriented obliquely with reference to the object surface being formed by means of the reference element (R), and the device being designed such that the depth scanning for shape measurement is performed by means of a movement of the object (O) parallel to the common axis of the panoramic optics (RSO) and of the object (O), **characterized in that** the panoramic optics (RSO) is designed for generating a spherical image plane (BE).

2. Device according to Claim 1, **characterized in that** the panoramic optics (RSO) is designed for generating a spherical wave centred in or outside the panoramic optics (RSO).

3. Device according to Claim 1 or 2, **characterized**
**in that** the object surface is at least partially rotationally symmetrical to an object axis,
**in that** the panoramic optics (RSO) is designed for imaging the surface thus formed, in particular of a cylinder, a cone or a sphere, into a plane, and
**in that** the panoramic optics is moved along the object axis during depth scanning.

4. Device according to one of the preceding claims, **characterized in that** the panoramic optics (RSO) is designed for generating a wave front lying perpendicular to the object surface.

5. Device according to one of the preceding claims, **characterized in that** the panoramic optics (RSO) is designed as an endoscope and/or for generating an intermediate image in an object arm lying in the object light path.

6. Device according to one of the preceding claims, **characterized in that** the reference element (R) is designed as a spherical, conical or plane reference mirror.

7. Device according to one of the preceding claims, **characterized in that** the interferometer is constructed in such a way that the object beam (OS) and the reference beam (RS) are formed in the same light path (common path arrangement).

8. Device according to one of the preceding claims, **characterized in that** the image sensor (BA) is designed as part of a CCD camera or a CMOS camera, or as an arrangement of photodiodes, and **in that** the evaluation device is designed in such a way that only the region of an interference zone is taken into account.

9. Device according to one of the preceding claims, **characterized in that** the reference surface (RE) cuts the region of the object surface which lies in the imaging region of the panoramic optics (RSO) in a fashion oblique to the object surface, preferably in the line of intersection between the image plane (BE) and object surface.

10. Device according to one of the preceding claims, **characterized in that** the reference surface (RE) is designed spherically as a sphere with the same or a different radius as/from the image plane, or as a plane.

11. Device according to one of the preceding claims, **characterized in that**, when the object (O) is being imaged onto the image sensor (BA), the imaging properties can be influenced by at least one adaptive optical element (AOE) inserted into the relevant beam path.

12. Device according to one of the preceding claims, **characterized in that** inserted in the reference beam path is at least one adaptive optical element (AOER) with the aid of which the reference beam path can be influenced to adapt to the reference plane.

## Revendications

1. Dispositif de mesure interférométrique pour mesurer la forme de la surface d'un objet (O) par détection de profondeur comportant une source de rayonnement (LQ) fournissant un rayonnement à cohérence courte, un diviseur de faisceau (ST) pour former un faisceau objet (OS) conduit selon un chemin de lumière objet, avec une optique circulaire (RSO) vers l'objet (O) et un faisceau de référence (RS) conduit par un chemin de lumière de référence vers un élément de référence (R) réfléchissant ainsi qu'un capteur d'image (BA) qui reçoit le rayonnement renvoyé et mis en interférence par l'objet (O) et l'élément de référence (R) pour être fourni à une installation d'exploitation pour déterminer la forme de la surface,
à l'aide de l'élément de référence (R) on forme une surface de référence (RE) orientée en biais par rapport à la surface objet et le dispositif est réalisé pour que la détection en profondeur pour la mesure de la forme se fasse avec un mouvement relatif parallèle de l'objet (O) par rapport à l'axe commun de l'optique de vision circulaire (RSO) et de l'objet (O),
**caractérisé en ce que**
l'optique de vision circulaire (RSO) est conçue pour générer un plan-image sphérique (BE).

2. Dispositif selon la revendication 1,
**caractérisé en ce que**
l'optique de vision circulaire (RSO) est réalisée pour générer une onde sphérique dont le centre se trouve dans ou à l'extérieur de l'optique de vision circulaire (RSO).

3. Dispositif selon la revendication 1 ou 2,
**caractérisé en ce que**
la surface de l'objet présente au moins en partie une symétrie de rotation par rapport à l'axe de l'objet,
l'optique de vision circulaire (RSO) est réalisée pour former l'image de la surface ainsi formée, notamment d'un cylindre, d'un cône ou d'une sphère dans un plan et
l'optique de vision circulaire se déplace le long de l'axe de l'objet au cours de la détection de profondeur.

4. Dispositif selon l'une des revendications précédentes,
**caractérisé en ce que**
l'optique de vision circulaire (RSO) est réalisée pour générer un front d'onde perpendiculaire à la surface de l'objet.

5. Dispositif selon l'une des revendications précédentes,
**caractérisé en ce que**
l'optique de vision circulaire (RSO) est réalisée sous la forme d'un endoscope et/ou pour générer une image intermédiaire dans un bras objet situé dans le chemin de la lumière de l'objet.

6. Dispositif selon l'une des revendications précédentes,
**caractérisé en ce que**
l'élément de référence (R) est un miroir de référence, sphérique, tronconique ou plan.

7. Dispositif selon l'une des revendications précédentes,
**caractérisé en ce que**
l'interféromètre est réalisé pour que le faisceau objet (OS) et le faisceau de référence (RS) soient formés dans le même chemin de lumière (dispositif à chemin commun).

8. Dispositif selon l'une des revendications précédentes,
**caractérisé en ce que**
le capteur d'image (BA) fait partie d'une caméra CCD ou d'une caméra CMOS ou est réalisé comme montage formé de photodiodes et l'installation d'exploitation est réalisée pour ne tenir compte que de la zone d'un domaine d'interférences.

9. Dispositif selon l'une des revendications précédentes,
**caractérisé en ce que**
la surface de référence (RE) coupe la zone de la surface de l'objet qui se situe dans la plage d'image de l'optique de vision circulaire (RSO), en étant inclinée par rapport à la surface de l'objet, de préférence dans la ligne de coupe du plan image (BE) et de la surface de l'objet.

10. Dispositif selon l'une des revendications précédentes,
**caractérisé en ce que**
la surface de référence (RE) est réalisée avec une forme sphérique de rayon identique ou différent à celui du plan image, comme cône ou comme plan.

11. Dispositif selon l'une des revendications précédentes,
**caractérisé en ce qu'**
en formant l'image de l'objet (o) sur le capteur d'image (BA), on influence les propriétés d'imagerie par au moins un élément optique adaptatif (AOE) inséré dans le chemin de faisceau correspondant.

12. Dispositif selon l'une des revendications précédentes,
**caractérisé en ce qu'**
un élément optique adaptatif (AOER) est inséré dans le chemin du faisceau de référence, élément par lequel le chemin du faisceau de référence est influencé pour s'adapter au plan de référence.
